**Europäisches Patentamt**

**European Patent Office**

**Office européen des brevets**

(19)

(11) Veröffentlichungsnummer: **0 119 318**
**B1**

(12) **EUROPÄISCHE PATENTSCHRIFT**

(45) Veröffentlichungstag der Patentschrift:
16.03.88

(51) Int. Cl.⁴: **F 16 B 12/04,** F 16 B 12/12,
F 16 B 11/00

(21) Anmeldenummer: **83112870.7**

(22) Anmeldetag: **21.12.83**

(54) Unsichtbare Verbindung von flächigen Teilen, insbesondere bei Möbeln.

(30) Priorität: 19.03.83 DE 3309953
07.05.83 DE 3316855
03.06.83 DE 3320184
21.10.83 DE 3338224
15.11.83 DE 3341312
25.11.83 DE 3342547

(43) Veröffentlichungstag der Anmeldung:
26.09.84 Patentblatt 84/39

(45) Bekanntmachung des Hinweises auf die Patenterteilung:
16.03.88 Patentblatt 88/11

(84) Benannte Vertragsstaaten:
AT BE CH FR GB IT LI LU NL SE

(56) Entgegenhaltungen:
CH-A-604 025
DE-A-2 518 135
DE-A-3 014 798
DE-A-3 121 112
DE-B-1 902 066
DE-U-1 942 248
GB-A-1 293 620
US-A-3 964 948

(73) Patentinhaber: **Fischer, Walter, Rationalstrasse 4,
D-4520 Melle 7 (DE)**

(72) Erfinder: **Fischer, Walter, Rationalstrasse 4, D-4520
Melle 7 (DE)**

(74) Vertreter: **Schirmer, Siegfried, Osningstrasse 10,
D-4800 Bielefeld 1 (DE)**

## Beschreibung

Die Erfindung betrifft das Herstellen einer unsichtbaren Verbindung zwischen einem ersten und einem zweiten Möbelteil mittels eines in einem zylindrischen Bohrloch des ersten und einem zylindrischen Bohrloch des zweiten Möbelteils verklebten zylindrischen Verbindungselementes, das in die Bohrlöcher eingeschlagen oder eingepreßt ist. Des Einpressen oder Einschlagen des Verbindungselementes in die Bohrlöcher erfolgt, nachdem in diese ein flüssiger oder pastöser Klebstoff, der auch aufschäumende Eigenschaften haben kann, eingebracht ist.

Das Herstellen einer derartigen Verbindung ist z. B. zur rechtwinkligen Verbindung einer Seitenwand eines Möbelkorpus mit dem Unterboden bekannt. Dabei wird das Verbindungselement in vorbereitete zylindrische Bohrungen der zu verbindenden Teile eingeführt. Zur Erhöhung der Festigkeit wird vor dem Einführen des Verbindungselements in die zylindrische Bohrung ein flüssiges oder pastöses Mittel mit klebenden bzw. haftenden und/oder aufschäumenden Eigenschaften eingebracht. Dieses Einführen des Klebstoffs ist zeitaufwendig und erfordert höchste Sorgfalt. Es läßt sich nicht vermeiden, daß Verunreinigungen der Oberflächen der flächigen Teile eintreten. Eine exakte Dosierung der für jedes Bohrloch erforderlichen Menge des Klebstoffs ist erforderlich, aber nicht ohne Aufwand realisierbar. Der in das Bohrloch eingebrachte Klebstoff wird vom Verbindungselement beim Einführen im wesentlichen gegen die Stirnwandung des Bohrloches und teilweise in die Spanplatte hineingedruckt. Eine gleichmäßige Verteilung des Klebstoffs über die Länge des Verbindungselements ist im allgemeinen nicht in vollem Ausmaß sichergestellt. Nach der Einbringung des Klebstoffs muß die Herstellung der Verbindung in relativ kurzer Zeit erfolgen, da anderenfalls eine vorzeitige Aushärtung des Klebstoffs eintritt.

Allgemein bekannt (DE-A-24 26 618; GB-A-12 93 620; DE-A-25 18 135; DE-A-31 21 112; US-A-39 64 948) ist ferner, ein zapfenförmiges Element in einem Bohrloch zu verankern oder zu verkleben, indem zunächst eine "Kunstharzkapsel", eine "Patrone", ein "chemischer Dübel" oder eine "Klebepatrone" mit Kunstharz oder Klebemittel (DE-A-31 21 112) in einer Hülle in das Bohrloch eingebracht, dann das zapfenförmige Element in das Bohrloch eingeführt und dabei die Hülle zerstört und das Kunstharz oder das Klebemittel verteilt und die Verankerung unter Verfestigung des Kunstharzes oder des Klebemittels bewirkt wird. Durch diese Vorgehensweise läßt sich die Kunstharz- oder Klebemittelmenge für jeden Fall genau dosieren.

In der DE-A-25 18 135 ist z. B. die Möglichkeit der Herstellung verschiedener "Dübel" und unterschiedlich langer "Dübel" angesprochen. Das Einbringen des Kunstharzes oder Klebemittels in das Bohrloch ist vereinfacht. Zum Einsatz kommen beim Stand der Technik vor allem Zweikomponentenklebemittel, und beide Komponenten sind im allgemeinen in der Patrone, Kapsel od. dgl. selbständigen Teil untergebracht. Um die Hülle zu zerstören und die Vermischung der beiden Komponenten zu erreichen, ist überwiegend ein Einführen des zapfenförmigen Elementes mit einer Drehbewegung vorgesehen. Nach der DE-A-24 26 618 enthält die über längere Zeit lagerfähige Klebepatrone dampfdicht abgeschlossenen Einkomponentenkleber. Zum Aushärten nach dem Zerstören der Hülle, die aus Glas oder Kunststoff bestehen kann, dient Feuchtigkeit. Mit dem Aushärten tritt eine Ausdehnung der Klebemasse ein, weil ein porenbildendes Treibmittel frei wird. Zur Zerstörung der Klebepatrone wird die zu verankernde Ankerstange in das Bohrloch getrieben. Die dabei auftretenden Scherkräfte und Bewegungen reichen aus, um die Reaktionen einzuleiten. Bei der D-B-19 02 066 und der DE-A-24 26 618 ist als Material der Hülle unter anderem Kunststoffolie, also flexibles Material vorgesehen. Um den Halt der Hülle in dem Bohrloch zu verbessern, ist es weiterhin bekannt, die Außenseite mit Rippen oder die Abschlußkappe(n) der Hülle mit überstehenden Flanschen zu versehen (GB-A-12 93 620). In allen diesen Entgegenhaltungen sind vor allem Anwendungen in der Bautechnik erwähnt. Die Bohrlöcher sind in Gestein, Mauerwerk, Beton u. ä. vorgesehen, und es geht darum, einen Anker od. dgl. einseitig einzugießen oder zu verankern. Die Auswahl der Klebemittel ist diesen Anwendungen entsprechend. Ein Hinweis auf die Möglichkeit der Anwendung bei Möbeln und zum Herstellen unsichtbarer Verbindungen bei diesen in der eingangs beschriebenen Art geht aus den Druckschriften nicht hervor.

Bekannt sind ferner Befestigungs- oder Verbindungselemente zur Herstellung unsichtbarer Verbindungen zwischen Möbelteilen mit längsverlaufenden Riefelungen auf der Außenseite (DE-U-19 42 248, DE-B-19 02 066, DE-A-30 14 798). Derartige Riefelungen können auf der Außenseite gleichmäßig verteilt sein und der Führung von Leim dienen. Auch sind Verbindungselemente für die Herstellung unsichtbarer Verbindungen von Möbelteilen bekannt, deren Enden spitzverlaufend ausgebildet sind.

Aus der bereits genannten GB-A-12 93 620 sowie aus der CH-A-604 025 ist des weiteren bekannt, das selbständige Teil im Bohrloch einzuklemmen und zu diesem Zweck an der Außenseite der Hülle Klemmorgane anzuordnen. Die Klemmorgane können aus einem aufgeschobenen elastischen Ring bestehen oder aus Rippen oder dgl. vorstehenden Teilen, aber auch aus einer Kappe mit über die zylindrische Wandung der Hülle auskragenden Flanschen oder dgl.. Hierbei ist im allgemeinen der Durchmesser der Hülle zur Erreichung einer Verklemmung dem jeweiligen Durchmesser des Bohrloches angepaßt.

Eine Verwendung der selbständigen Teile konstanten Durchmessers für verschieden große Durchmesser der Bohrlöcher ist nicht möglich.

Zur Erreichung eines Preßsitzes im Bohrloch ist es bekannt, den Durchmesser des Verbindungselements minimal größer als den Durchmesser des Bohrloches zu wählen. Das Verbindungselement wird zur Hälfte in die vorbereitete zylindrische Bohrung der Seitenwand eines Möbelkorpus eingedrückt oder eingeschlagen. Danach wird der anzuschließende Ober- oder Unterboden des Möbelkorpus angeschlossen, indem das Anschlußteil des Verbindungselements in eine ebenfalls vorbereitete zylindrische Bohrung des Ober- oder Unterbodens eingesetzt und anschließend der Ober- oder Unterboden fest gegen die Seitenwand gedrückt bzw. gepreßt wird. Hierzu werden eine Zwinge oder ein sonstiges Preßorgan bzw. ein Hammer verwendet. Hierbei läßt sich nicht ausschließen, daß am äußeren Rand des Bohrlochs eine Auftreibung des Materials eintritt.

Aus dem DE-U-19 42 248 ist es bekannt, die Quellfähigkeit von Holz für Dübel zu nutzen. Allerdings reicht die Quellkraft auch eines profilierten Holzdübels nicht aus, um eine wirkliche Spannung im Bohrloch zu erzeugen.

Der Erfindung liegt die Aufgabe zugrunde, eine unsichtbare Verbindung der aufgezeigten Gattung zu schaffen, bei der mit geringem Aufwand ohne Gefahr der Verunreinigung der Oberflachen der zu verbindenden Teile der Klebstoff in der genau erforderlichen Dosierung in die Bohrlöcher einbringbar ist und die Herstellung der Verbindung zeitlich nicht an das Einbringen des Klebstoffes gebunden ist, wobei eine gleichmäßige Verteilung des Klebstoffes über die Länge des Verbindungselements erfolgt und das Verbindungselement so auszubilden, daß zum Einbringen in das Bohrloch keine Preß- oder Schlagwerkzeuge erforderlich sind bei Erreichung einer äußerst schnellen und sicheren Verbindung zwischen den Teilen.

Diese Aufgabe wird erfindungsgemäß durch die Merkmale des Anspruchs 1 gelöst. Zweckmäßige Ausgestaltungen der Erfindung sind in den Unteransprüchen aufgezeigt.

Der hermetisch in eine Hülle eingeschlossene Klebstoff kann vorteilhafterweise in das zylindrische Bohrloch unmittelbar nach der Herstellung des Bohrloches eingedrückt oder eingeblasen werden. Da der Außendurchmesser der flexiblen Hülle geringfügig größer als der Durchmesser des Bohrloches ist, verklemmt sich die flexible Hülle nach dem Einbringen im Bohrloch. Dadurch ist die Möglichkeit gegeben, den Klebstoff zeitlich unabhängig von der Herstellung der eigentlichen Verbindung der flächigen Teile einzubringen. Der Zusammenbau der Einzelteile unter Verwendung eines in eine Hülle eingeschlossenen Klebstoffes in Kombination mit Verbindungselementen kann auch durch Nichtfachleute äußerst sauber ausgeführt werden, z. B. im Selbstbau. Der in eine Hülle eingeschlossene Klebstoff ist für den jeweiligen Verwendungszweck dosiert und über einen längeren Zeitraum, der Jahre betragen kann, lagerfähig. Die Hülle selbst wird beim Einbringen des Verbindungselements in das zylindrische Bohrloch zerstört und dadurch der Klebstoff freigesetzt.

Durch die Freilegung des Hirnholzes des zylindrischen Verbindungselements, das bekannterweise gegenüber eindringender Feuchtigkeit wenig widerstandsfähig ist, wird die Aufquellfähigkeit des Holzes bzw. des holzähnlichen Materials und damit die Verbundwirkung wesentlich verbessert. Außerdem wird die im Klebstoff enthaltene Feuchtigkeit bedeutend schneller aufgenommen und dadurch der Zeitraum zur Herstellung einer festen Verbindung verkürzt. Infolge der schnellen Aufquellbarkeit des Verbindungselements tritt beim Zusammenfügen der Einzelteile keine Vibration ein. Das Auftreten von sogenannten Haarrissen ist daher ausgeschlossen. Die Verbundwirkung wird noch dadurch wesentlich beschleunigt und vergrößert, daß auch die Span- bzw. Holzplatte des Möbelkorpus einen Teil der Feuchtigkeit des Klebstoffes aufnimmt und dabei unter Berücksichtigung der gegebenen Möglichkeiten aufquellt. Dabei wächst die Platte in die Ringfräsungen ein und bildet sogenannte Federn. Diese Nut-/Federverbindung ist in der Lage, größere Kräfte zu übertragen.

Ausführungsbeispiele der Erfindung sind in der Zeichnung dargestellt und werden im folgenden näher beschrieben. Es zeigen jeweils in vergrößerter Darstellung:

Fig. 1 einen Schnitt durch eine in ein Bohrloch eingebrachte, einen Klebstoff enthaltende flexible Hülle mit einem Verbindungselement vor dem Auftreffen auf die flexible Hülle;

Fig. 2 einen Schnitt durch eine Variante einer einen Klebstoff enthaltenden flexiblen Hülle;

Fig. 3 wie Fig. 2, jedoch mit einer Hülle aus Glas;

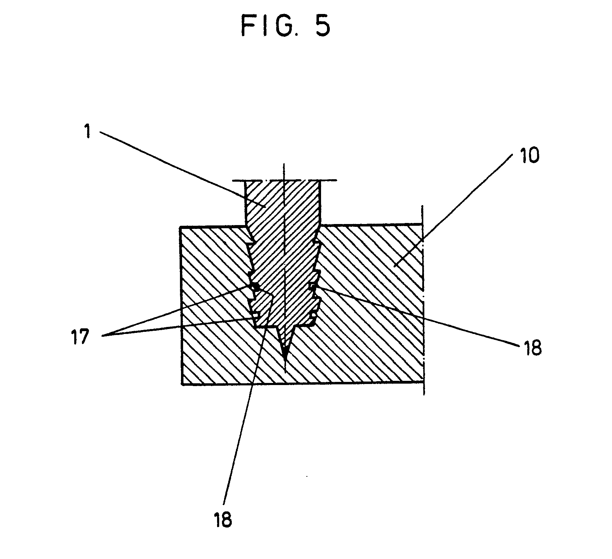

Fig. 4 einen Schnitt durch ein Verbindungselement und Fig. 5 einen Schnitt durch eine Verbindung zwischen einem Verbindungselement und einer Seitenwand eines Möbelkorpus (Holzspanplatte) nach Eintreten der Verbundwirkung.

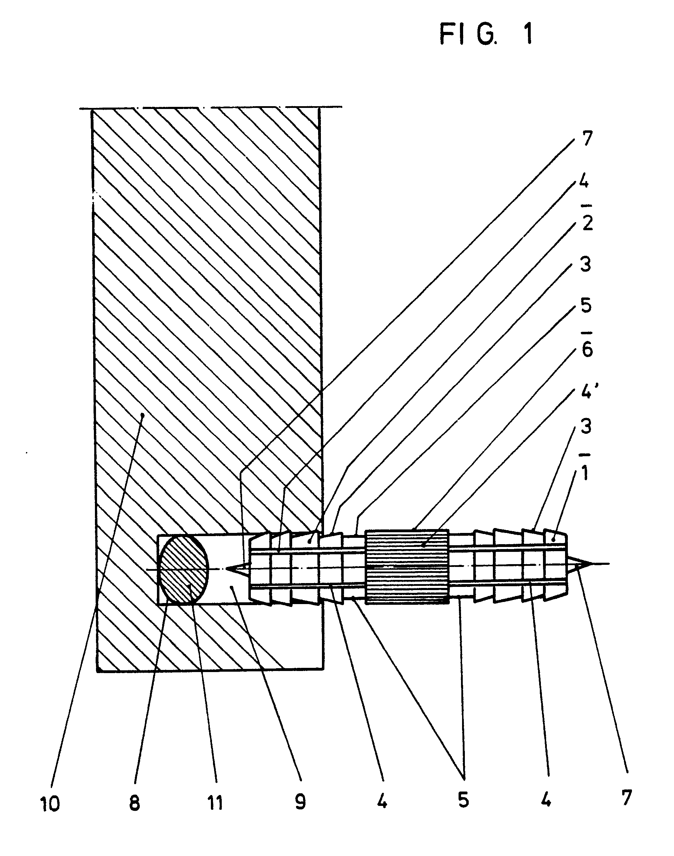

Gemäß Fig. 1 ist in das in einer Seitenwand 10 eines Möbelkorpus befindliche zylindrische Bohrloch 9 ein in einer flexiblen Hülle 8 befindlicher Klebstoff 11 als selbständiger Teil eingedrückt oder eingeblasen. Da der Durchmesser der flexiblen Hülle 8 etwas größer als der Durchmesser des zylindrischen Bohrloches 9 ist, ist die flexible Hülle 8 mit dem Klebstoff 11 fest im Bohrloch 9 gehaltert. Hierbei kann die flexible Hülle 8 beliebige Gestaltung aufweisen. Die Menge des hermetisch in der flexiblen Hülle 8 eingeschlossenen Klebstoffes 11 ist exakt für den jeweiligen Verwendungszweck dosiert.

Das Verbindungselement ist einteilig ausgebildet und besteht aus dem Basisteil 1 und dem Anschlußteil 2, die beide gleiche Länge aufweisen. Auf der Außenfläche des Verbindungselements sind gegeneinander gerichtete und identische Durchmesser aufweisende Ringkerben 3 angeordnet, wobei deren Breiten unregelmäßig verschieden groß sind. Daraus ergibt sich, daß die Abstände zwischen den Ringkerben 3 unterschiedlich groß sind. Das Verbindungselement kann aus beliebigen Materialien hergestellt sein, z. B. aus Holz, Kunststoff, Gußeisen oder einer Kombination verschiedener Materialien.

Zwischen dem Basis- 1 und dem Anschlußteil 2 ist ein mittiges Zylinderteil 6 vorgesehen. Zur Aufnahme der beim Einbringen des Verbindungselements in das zylindrische Bohrloch 9 auftretenden Auftreibung des Materials am äußeren Rand des Bohrloches 9 sind zwischen dem Zylinderteil 6 und dem Basis-1 bzw. dem Anschlußteil 2 Ringnuten 5 angeordnet. An den beiden Stirnseiten ist jeweils eine Spitze 7 vorhanden, die zum Zerstören der flexiblen Hülle 8 des Klebstoffes 11 dient und damit das Freisetzen des Klebstoffes 11 ermöglicht. Gleichzeitig wird damit eine zusätzliche Verankerung des Verbindungselements in der Stirnwand des Bohrlochs 9 erreicht.

Auf der Außenseite des Verbindungselements sind Nuten 4 vorgesehen, die im Bereich des Basis- 1 und des Anschlußteils 2 längsverlaufend angeordnet sind. Die Außenseite des Zylinderteils 6 besitzt Feinstriefelungen 4', die beliebig verlaufen können.

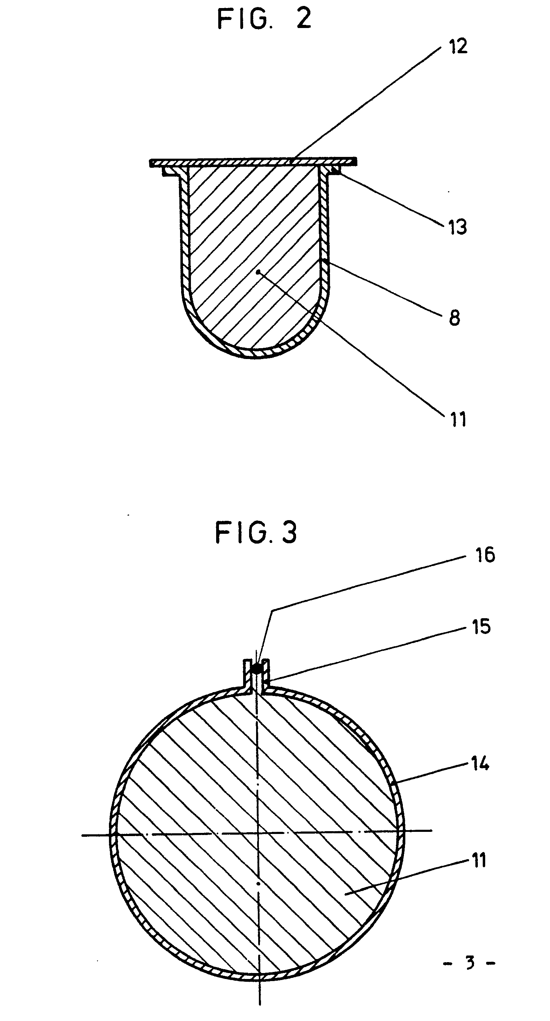

Nach Fig. 2 besitzt die flexible Hülle 8 annähernd zylindrische Form mit einer stirnseitigen Abdeckung 12, wobei diese Abdeckung 12 mit einer umlaufenden Abwinkung 13 der Hülle 8 verschweißt ist, so daß der Klebstoff 11 hermetisch eingeschlossen ist. Die stirnseitige Abdeckung 12 besteht aus einer Folie und kragt über die umlaufende Abwinkung 13 aus. Sie dient gleichzeitig als flexibles Klemmorgan für die in das Bohrloch 9 eingebrachte flexible Hülle 8. Durch die Anordnung eines oder mehrerer Klemmorgane ist es möglich, für unterschiedliche Bohrlochdurchmesser jeweils Hüllen 8 gleicher Abmessung zu verwenden und trotzdem eine ausreichende Verklemmung der Hülle 8 im Bohrloch 9 zu erreichen. Die Klemmwirkung im Bohrloch 9 wird bei dieser Ausführung der flexiblen Hülle 8 also nicht mehr durch die Hülle 8 direkt, sondern über die an der Außenseite der Hülle 8 angeordneten flexiblen Klemmorgane erzielt. Hierdurch wird auch das Einbringen der mit einem Klebstoff 11 gefüllten flexiblen Hülle 8 in das zylindrische Bohrloch 9 erleichtert, da nicht mehr die Hülle 8 selbst, sondern nur die flexiblen Klemmorgane zusammengedrückt werden müssen.

Die Gestaltung einer flexiblen Hülle 8 gemäß Fig. 2 ermöglicht die Formung im Tiefzugverfahren, zweckmäßigerweise aus einer Tafelfläche. Die stirnseitige Abdeckung 12 wird nach dem Einfüllen des Klebstoffes 11 in die zylinderförmigen Hüllen 8 aufgeschweißt und danach die Tafelfläche in die einzelnen nunmehr hermetisch abgeschlossenen Hüllen 8 durch Brennen oder Stanzen getrennt.

Die kugelförmige Hülle 14 besteht aus einem leicht zerbrechlichem Material, wozu sich Glas besonders eignet, und ist mit Klebstoff 11 gefüllt. Auf der Wandung der Hülle 14 ist ein zylindrischer Stutzen 15 angeordnet, der durch eine elastische Masse 16 nach außen hermetisch abgeschlossen ist.

Bei einer aus Glas bestehenden Hülle 14 werden die einzelnen Glassplitter der zerstörten Hülle 14 durch den Druck des Verbindungselements in die Wandungen des zylindrischen Bohrloches 9 gedrückt und zum Teil auch in das aus Holz bestehende Verbindungselement selbst, wodurch die Glassplitter eine zusätzliche Verbindung zwischen Verbindungselement und Wandung des Bohrloches 9 der zu verbindenden Teile herstellen.

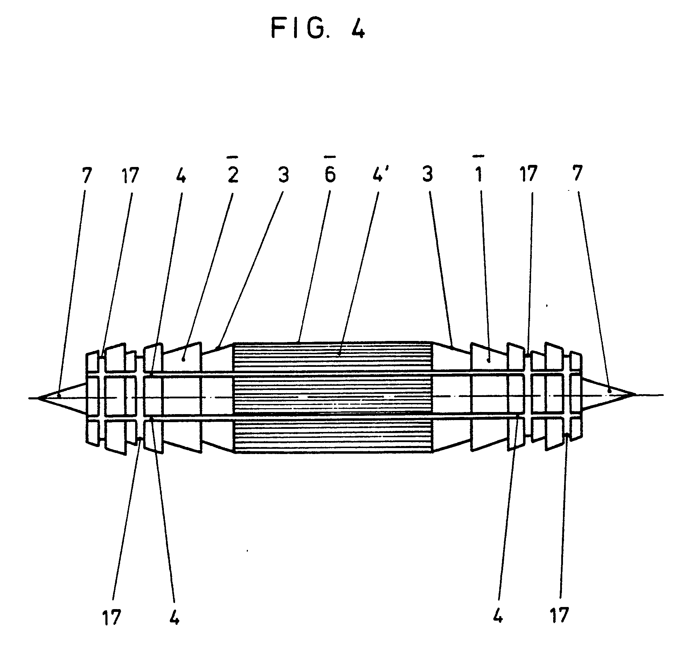

Das Verbindungselement gemäß Fig. 4 besteht aus Holz oder einem äquivalenten Material und weist gegenüber dem Durchmesser des Bohrloches 9 einen kleineren Durchmesser auf. Der Rohling des Verbindungselements wird um ein vorgegebenes Maß zusammengepreßt und dabei gleichzeitig die Ringkerben 3, die längsverlaufenden Nuten 4, die Feinstriefelungen 4' und die Ringfräsungen 17 auf der Außenfläche eingepreßt und/oder eingeschnitten.

Bei einem bevorzugten Ausführungsbeispiel besitzt das Bohrloch 9 einen Durchmesser von 8 mm. Der Durchmesser des Rohlings des Verbindungselements besitzt einen Ausgangsdurchmesser von 8,7 mm und wird auf einen Durchmesser von 7,9 mm zusammengepreßt. Infolge der Zunahme des Gehalts an gebundenem Wasser quellt das Verbindungselement auf einen Durchmesser von mehr als 8,2 mm, im allgemeinen auf einen Durchmesser von 8,8 mm, so daß dadurch ein fester Preßsitz des in das Bohrloch 9 eingeführten Verbindungselements erreicht wird. Durch die Ringfräsungen 17 ist das Hirnholz des zylindrischen Verbindungselements freigelegt, wodurch die Aufquellmöglichkeit noch weiter verbessert wird bei gleichzeitiger Verkürzung der Herstellung der Verbundwirkung. Sowohl das Verbindungselement, als auch die Holzspan- oder Holzplatte 10 des Möbelkorpus nehmen die Feuchtigkeit des Klebstoffes 11 auf und quellen dadurch auf. Dabei wächst die Holzspanplatte 10 in die Ringfräsungen 17 des Verbindungselements und bildet die Federn 18.

Aufstellung der Bezugszeichen
1 Basisteil
2 Anschlußteil
3 Ringkerben
4 Nuten (längsverlaufend)

4' Feinst-Riefelungen
5 Ringnuten
6 Zylinderteil
7 Spitze
8 flexible Hülle
9 Bohrloch
10 Seitenwand Möbelkorpus (Holzspanplatte)
11 Klebstoff
12 stirnseitige Abdeckung der Hülle 8
13 umlaufende Abwinklung von 8
14 Glashülle
15 zylindrischer Stutzen an 14
16 elastische Masse in 15
17 Ringfräsungen
18 Feder

**Patentansprüche**

1. Anwendung des Verankerns eines zylindrischen Verbindungselementes (1, 2, 6), das eine zur vertikalen Mittelachse symmetrische Ausbildung, auf der Außenseite eine oder mehrere längsverlaufende Nuten (4, 4') sowie Ringkerben (3) und/oder sonstige Profilierungen (5, 17) aufweist und die beiden Stirnseiten jeweils spitz verlaufend ausgebildet sind oder eine Spitze (7) aufweisen, in einem Bohrloch (9), in dem zunächst ein einen flüssigen oder pastösen Klebstoff (11) in einer Hülle (8, 14) hermetisch eingeschlossenen enthaltendes selbständiges Teil in das Bohrloch (9) eingebracht, dann das Verbindungselement (1, 2, 6) in das Bohrloch (9) eingeführt und dabei die Hülle (8, 14) zerstört und der Klebstoff (11) verteilt und die Verankerung unter Verfestigung des Klebstoffs (11) bewirkt wird, bei Möbeln aus Holz oder holzähnlichem Material zur Herstellung einer unsichtbaren Verbindung von flächigen Teilen mittels eines in je einem zylindrischen Bohrloch (9) der zu verbindenden Teile verklebten Verbindungselements (1, 2, 6), das in die Bohrlöcher (9) eingeschlagen oder eingepreßt ist und mit dem Einschlagen oder Einpressen des Verbindungselements (1, 2, 6) als den Maßnahmen zur Zerstörung der Hüllen (8, 14) und der Verteilung des Klebstoffs (11) im den Bohrlöchern (9) beider Möbelteile.

2. Anwendung nach Anspruch 1 in der Weise, daß das Einbringen der den Klebstoff (11) enthaltenden selbständigen Teile in die Bohrlöcher (9) unmittelbar nach der Herstellung der Bohrlöcher (9) in den Möbelteilen durch Eindrücken oder Einblasen vorgenommen wird.

3. Verbindungsanordnung nach Anspruch 1 oder 2, dadurch gekennzeichnet, daß für das Verklemmen der mit Klebstoff gefüllten flexiblen Hülle (8) im Bohrloch (9) an ihrer Außenseite ein oder mehrere Klemmorgan(e) angeordnet ist bzw. sind, das bzw. die durch ein Element der Klebstoffumhüllung gebildet ist bzw. sind.

4. Verbindungsanordnung nach Anspruch 3, dadurch gekennzeichnet, daß die Klemmorgane der mit Klebstoff gefüllten flexiblen Hülle (8) flexibel ausgebildet und gleichmäßig über ihren Umfang verlaufend bzw. gleichmäßig verteilt angeordnet sind.

5. Verbindungsanordnung nach Anspruch 3 oder 4, gekennzeichnet durch eine annähernd zylindrische Form der mit Klebstoff gefüllten flexiblen Hülle (8) mit einer stirnseitigen Abdeckung (12).

6. Verbindungsanordnung nach Anspruch 5, dadurch gekennzeichnet, daß die Verbindung der Abdeckung (12) mit der zylindrischen Wandung der mit Klebstoff gefüllten flexiblen Hülle (8) durch Schweißen vorgenommen ist.

7. Verbindungsanordnung nach einem der Ansprüche 3 bis 6, dadurch gekennzeichnet, daß die zylindrische Wandung der mit Klebstoff gefüllten flexiblen Hülle eine umlaufende Abwinklung (13) aufweist.

8. Verbindungsanordnung nach einem der Ansprüche 3 bis 7, dadurch gekennzeichnet, daß die Abdeckung (12) der mit Klebstoff gefüllten flexiblen Hülle über die zylindrische Wandung auskragt und das Klemmorgan bildet.

9. Verbindungsanordnung nach Anspruch 7 oder 8, dadurch gekennzeichnet, daß die Abdeckung (12) der mit Klebstoff gefüllten flexiblen Hülle mit der umlaufenden Abwinklung (13) bündig abschließt.

10. Verbindungsanordnung nach Anspruch 1 oder 2, dadurch gekennzeichnet, daß die mit Klebstoff gefüllte Hülle (14) aus leicht zerbrechlichem Material, vorzugsweise Glas, gebildet ist.

11. Verbindungsanordnung nach Anspruch 10, dadurch gekennzeichnet, daß die mit Klebstoff gefüllte Hülle (14) eine oder mehrere Sollbruchstelle(n) aufweist.

12. Verbindungsanordnung nach Anspruch 11, dadurch gekennzeichnet, daß die Sollbruchstellen durch eine oder mehrere umlaufende Einschnürungen gebildet sind.

13. Verbindungsanordnung nach einem der Ansprüche 10 bis 12, dadurch gekennzeichnet, daß die mit Klebstoff gefüllte Hülle (14) annähernd Kugelform aufweist, wobei auf dem Mantel ein zylindrischer Stutzen (15) angeordnet ist.

14. Verbindungsanordnung nach Anspruch 13, dadurch gekennzeichnet, daß der zylindrische Stutzen (15) der mit Klebstoff gefüllten Hüllen nach außen durch Verschmelzung, durch eine elastische Masse (16) oder durch eine Kappe abgeschlossen ist.

15. Verbindungsanordnung nach Anspruch 1 oder 2, dadurch gekennzeichnet, daß das Verbindungselement (1, 2, 6) aus einem um ein vorgegebenes Maß zusammengepreßten zylindrischen Rohling aus Holz oder einem anderen statisch stabilen aufquellmöglichen Material besteht und einen gegenüber dem Durchmesser des Bohrlochs (9) kleineren Durchmesser aufweist.

16. Verbindungsanordnung nach Anspruch 15, dadurch gekennzeichnet, daß die Außenfläche des Verbindungselements (1, 2, 6) zur Freilegung des Hirnholzes an mehreren Stellen durch Einschneiden zerstört ist.

17. Verbindungsanordnung nach Anspruch 16, dadurch gekennzeichnet, daß die Zerstörung der Außenfläche an den beiden Enden des Verbindungselements (1, 2, 6) vorgenommen ist.

18. Verbindungsanordnung nach Anspruch 15 oder 16, dadurch gekennzeichnet, daß am Verbindungselement (1, 2, 6) jeweils eine oder mehrere Ringfräsungen (17) angeordnet sind.

## Claims

1. Use of the anchoring of a cylindrical connecting element (1, 2, 6), which displays a construction symmetrical about the vertical centre line and one or more longitudinally extending grooves (4, 4') as well as annular notches (3) and/or other kinds of profilings (5, 17) on the outside and both the end faces are each constructed to extend in pointed shape or possess a point (7), in a bored hole (9), in that at first an independent part containing a liquid or pasty adhesive substance (11) hermetically enclosed in a sleeve (8, 14) is brought into the bored hole (9), then the connecting element (1, 2, 6) is introduced into the bored hole (9) and the sleeve (8, 14) at the same time and the adhesive substance (11) is distributed and the anchoring is effected under solidification of adhesive substance (11), in the case of furniture pieces of wood or woodlike material for the production of an invisible connection of areal parts by means of a connecting element (1, 2, 6), which is glued into a respective bored hole (9) of each of the parts to be connected together and hammered or pressed into the bored holes (9), and with the hammering-in or pressing-in of the connecting element (1, 2, 6) as the measures for the destruction of the sleeves (8, 14) and the distribution of the adhesive substance (11) in the bored holes (9) of both furniture parts.

2. Use according to claim 1 in such a manner that the introduction of the independent parts containing the adhesive substance (11) into the bored holes (9) is undertaken by pressing-in or blowing-in immediately after the production of the bored holes (9) in the furniture parts.

3. Connecting arrangement according to claim 1 or 2, characterised thereby, that for the wedging, in the bored hole (9), of the flexible sleeve (8) filled with adhesive substance, one or more wedging organs is or are arranged at the outside of the sleeve and, for example, formed by an element of the adhesive substance envelope.

4. Connecting arrangement according to claim 3, characterised thereby, that the wedging organs of the flexible sleeve (8) filled with adhesive substance are constructed to be flexible and arranged to be uniformly distributed or extending around its circumference.

5. Connecting arrangement according to claim 3 or 4, characterised by an approximately cylindrical shape of the flexible sleeve (8) filled with adhesive substance with a cover (12) at the end face.

6. Connecting arrangement according to claim 5, characterised thereby, that the connection of the cover (12) with the cylindrical wall of the flexible sleeve (8) filled with adhesive substance is undertaken by welding.

7. Connecting arrangement according to one of the claims 3 to 6, characterised thereby, that the cylindrical wall of the flexible sleeve (8) filled with adhesive substance displays an encircling bent-over portion (13).

8. Connecting arrangement according to one of the claims 3 to 7, characterised thereby, that the cover (12) of the flexible sleeve (8) filled with adhesive substance juts out beyond the cylindrical wall and forms the wedging organ.

9. Connecting arrangement according to claim 7 or 8, characterised thereby, that the cover (12) of the flexible sleeve (8) filled with adhesive substance terminates flush with the encircling bent-over portion (13).

10. Connecting arrangement according to claim 7 or 2, characterised thereby, that the sleeve (14) filled with adhesive substance is formed of easily breakable material, preferably glass.

11. Connecting arrangement according to claim 10, characterised thereby, that the sleeve (14) filled with adhesive substance displays one or more predetermined frangible portions.

12. Connecting arrangement according to claim 11, characterised thereby, that the predetermined frangible portions are formed by one or more encircling constrictions.

13. Connecting arrangement according to one of the claims 10 to 12, characterised thereby, that the sleeve (14) filled with adhesive substance displays approximately spherical shape, while a cylindrical nipple (15) is arranged on the shell.

14. Connecting arrangement according to claim 13, characterised thereby, that the cylindrical nipple (15) of the sleeve (14) filled with adhesive substance is closed off outwardly by melting together, by an elastic mass (16) or by a cap.

15. Connecting arrangement according to claim 1 or 2, characterised thereby, that the connecting element (1, 2, 6) consists of a cylindrical blank, which is compressed by a predetermined amount, of wood or another statically stable, swellable material and displays a smaller diameter than the diameter of the bored hole (9).

16. Connecting arrangement according to claim 15, characterised thereby, that the external surface of the connecting element (1, 2, 6) is destroyed at several places through incising for exposure of the end-grained wood.

17. Connecting arrangement according to claim 16, characterised thereby, that the destruction of the external surface is undertaken at both ends of the connecting element (1, 2, 6).

18. Connecting arrangement according to claim 15 or 16, characterised thereby, that one or more annular milled grooves (17) are arranged at the connecting element (1, 2, 6).

## Revendications

1. Application de l'ancrage d'un élément d'assemblage (1, 2, 6), qui possède une configuration symétrique par rapport à l'axe médian vertical, qui possède sur le côté extérieur une ou plusieurs rainures (4, 4') se développant dans le sens longitudinal ainsi que des encoches annulaires (3) et/ou des profils de toute nature (5, 17) et dont les deux côtés frontaux sont chacun conformés en se développant en pointe, ou bien possèdent une pointe (7), dans un alésage (9), dans lequel est d'abord introduit une partie indépendante, dans l'alésage (9) et qui contient un produit collant (11) liquide ou pâteux, enfermé hermétiquement dans une gaine (8, 14), l'élément d'assemblage (1, 2, 6) étant ensuite introduit dans l'alésage (9) et la gaine (8, 14) étant à cette occasion détruite et le produit collant (11) répandu et l'ancrage étant effectué sous l'action du durcissement du produit collant (11), pour des meubles en bois ou bien en matériau semblable à du bois, pour la fabrication d'un assemblage invisible de parties plates, au moyen d'un élément d'assemblage (1, 2, 6) collé dans chaque alésage cylindrique (9) des pièces à assembler qui est frappé ou bien pressé et pour lequel la frappe ou bien le pressage de l'élément d'assemblage (1, 2, 6) est un moyen pour la destruction des gaines (8, 14) et pour répandre le produit collant (11), dans les alésages (9) des deux parties de meuble.

2. Application selon la revendication 1, de manière à ce que l'apport des parties indépendantes contenant le produit collant (11) est entrepris immédiatement après la fabrication des alésages (9) dans les parties de meubles, par pressage ou bien soufflage.

3. Arrangement d'assemblage selon la revendication 1 ou 2, caractérisé en ce qu'un ou plusieurs organe(s) de coïncement est (sont) disposé(s) pour le coïncement, sur le côté extérieur de la gaine flexible (8) dans l'alésage (9), qui est (sont) formé(s) par un élément du gainage du produit collant.

4. Arrangement d'assemblage selon la revendication 3, caractérisé en ce que les organes de coïncement de la gaine flexible (8) remplie de produit collant, sont conformés de manière flexible et régulièrement répartis en se développant sur sa périphérie, respectivement dans une répartition régulière.

5. Arrangement d'assemblage selon la revendication 3 ou 4, caractérisé par une forme approximativement cylindrique de la gaine flexible (8) remplie de produit collant, avec un recouvrement (12) du côté frontal.

6. Arrangement d'assemblage selon la revendication 5, caractérisé en ce que l'assemblage du recouvrement (12) avec la paroi cylindrique de la gaine flexible (8), remplie de produit collant, est effectué par soudage.

7. Arrangement d'assemblage selon l'une des revendications 3 à 6, caractérisé en ce que la paroi cylindrique de la gaine flexible (8), remplie de produit collant, possède un développement périphérique (13).

8. Arrangement d'assemblage selon l'une des revendications 3 à 7, caractérisé en ce que le recouvrement (12) de la gaine flexible (8), remplie de produit collant, émerge au-dessus de la paroi cylindrique et forme l'organe de coïncement.

9. Arrangement d'assemblage selon la revendication 7 ou 8, caractérisé en ce que le recouvrement (12) de la gaine flexible (8), remplie de produit collant, bouche le développement périphérique (13) en affleurement.

10. Arrangement d'assemblage selon la revendication 1 ou 2, caractérisé en ce que la gaine (14), remplie de produit collant, est formée d'un matériau facilement brisable, avantageusement du verre.

11. Arrangement d'assemblage selon la revendication 10, caractérisé en ce que la gaine (14), remplie de produit collant, possède un ou plusieurs point(s) de rupture théoriques.

12. Arrangement d'assemblage selon la revendication 11, caractérisé en ce que les points de rupture théoriques sont formés par un ou plusieurs rétrécissements.

13. Arrangement d'assemblage selon l'une des revendications 10 à 12, caractérisé en ce que la gaine (14), remplie de produit collant, possède une forme approximativement sphérique, une tubulure cylindrique (15) étant à cette occasion disposée sur l'enveloppe.

14. Arrangement d'assemblage selon la revendication 13, caractérisé en ce que la tubulure cylindrique (15) de la gaine (14), remplie de produit collant, est bouchée vers l'extérieur par fusion, par une masse élastique (16) ou bien par un capuchon.

15. Arrangement d'assemblage selon la revendication 1 ou 2, caractérisé en ce que l'élément d'assemblage (1, 2, 6) se compose d'une ébauche cylindrique compressée à une certaine côte, en bois ou bien en un autre matériau statique ayant des possibilités de gonflement stables et possèdent un diamètre plus petit que le diamètre de l'alésage (9).

16. Arrangement d'assemblage selon la revendication 15, caractérisé en ce que la surface extérieure de l'élément d'assemblage (1, 2, 6) est détruit pour libérer le bois en bout, en plusieurs endroits, par entaille.

17. Arrangement d'assemblage selon la revendication 16, caractérisé en ce que la destruction de la surface extérieure est réalisée aux deux extrémités de l'élément d'assemblage (1, 2, 6).

18. Arrangement d'assemblage selon la revendication 15 ou 16, caractérisé en ce qu'une ou plusieurs fraisures annulaires (17) sont disposées sur chaque élément d'assemblage (1, 2, 6).

FIG. 1

# FIG. 2

# FIG. 3

FIG. 4

# FIG. 5